# EUROPÄISCHE PATENTANMELDUNG

(11) **EP 4 087 136 A1**
(43) Veröffentlichungstag der Anmeldung: **09.11.2022**
(21) Anmeldenummer: 21172364.8
(22) Anmeldetag: 06.05.2021
(51) Int. Cl.: H03K 19/007

(54) **ELEKTRISCHES BETRIEBSMITTEL UND VERFAHREN ZUM BEHEBEN VON GERÄTESTÖRUNGEN**

(71) Anmelder: Siemens Aktiengesellschaft, 80333 München (DE)
(72) Erfinder: Kaufmann, Rainer, 12623 Berlin (DE); Persdorf, Dennis, 13503 Berlin (DE)

(57) **Zusammenfassung**

Gegenstand der vorliegenden Erfindung ist ein Elektrisches Betriebsmittel, aufweisend
eine Vorverarbeitungseinrichtung für digitale Messwerte, wobei die Vorverarbeitungseinrichtung einen integrierten Schaltkreis und einen elektronischen Speicherbaustein mit einer Konfiguration einer logischen Schaltung aufweist, und wobei
das elektrische Betriebsmittel ausgebildet ist, eine Störung der Vorverarbeitungseinrichtung zu erkennen, und dadurch gekennzeichnet, dass
das elektrische Betriebsmittel ausgebildet ist, im Falle einer Störung einen Betrieb der Vorverarbeitungseinrichtung solange zu unterbrechen, bis die Konfiguration der logischen Schaltung aus einem Konfigurationsspeicherbaustein in den elektronischen Speicherbaustein geladen ist.

Ferner ist Gegenstand der vorliegenden Erfindung ein Verfahren zum Beheben von Gerätestörungen.

## Beschreibung

Die Erfindung betrifft ein Elektrisches Betriebsmittel nach dem Oberbegriff des Anspruchs 1 und ein Verfahren zum Beheben von Gerätestörungen nach dem Oberbegriff des Anspruchs 9.

Ein sog. "Single Event Upset" (SEU) ist ein "Soft Error", d.h. ein "weicher" Fehler, der in Halbleiterbauelementen beim Durchgang hochenergetischer ionisierender Strahlung (z.B. Schwerionen, Protonen, Gamma-Strahlung, kosmische Strahlung) hervorgerufen werden kann. Er äußert sich beispielsweise als Bitflip (Änderung des Zustandes eines Bits) in Speicherbausteinen oder Registern, was zu einer Fehlfunktion des betroffenen Bauteils führen kann. Die Klassifizierung als "Soft Error" rührt daher, dass ein SEU keinen dauerhaften Schaden am betroffenen Bauteil bewirkt. Der Effekt wird beispielsweise auf Wikipedia beschrieben (permanenter Link: https://de.wikipedia.org/w/index.php?title=Single_Event_Upset & oldid=163234538).

Ein "Field Programmable Gate Array" (FPGA) oder programmierbares Logikgatter ist ein integrierter Schaltkreis der Digitaltechnik, in welchen eine logische Schaltung geladen werden kann. Ein solcher FPGA ist beispielsweise von Wikipedia bekannt (permanenter Link https://de.wikipedia.org/w/index.php?title=Field_Programmable _Gate_Array&oldid=206575960). Komplexe digitale Schaltungsfunktionen können in einem FPGA ähnlich einem klassischen Gate Array kundenspezifisch realisiert werden können.

In modernen multifunktionalen Schutz- bzw. Steuergeräten ist der Einsatz von FPGAs und deren frei programmierbarer Logik unumgänglich. Häufig werden sog. "static random-access memory" (SRAM) basierte FPGAs eingesetzt, die zwar kostengünstig sind, aber dem SEU-Effekt unterliegen und damit anfällig für Fehlfunktionen sind.
Im Gegensatz zur Hartverdrahtung eines Gate Arrays ist die Basis für die flexiblen Verdrahtungseigenschaften bei den allermeisten FPGAs ein vergrabenes SRAM, welches beim Systemstart ("Power-up") vollständig bespielt wird. Dieses SRAM wird "Configuration RAM" (CRAM) genannt und sorgt mit seinem Inhalt für die Konfiguration und Verschaltung der einzelnen Basislogikfunktionen des FPGAs und erzeugt so die gewünschte Innenschaltung.

Insbesondere sind Analogmesswerte für Spannungen und Ströme besonders kritisch zu betrachten, da nach der Digitalisierung der analogen Messgrößen schon ein einzelner verfälschter digitaler Messwert zu einer falschen Entscheidung im Gerät führen kann. In der Schutztechnik könnte es z.B. zu einer Fehlauslösung des Schutzgeräts und damit zu einer Abschaltung eines Netzabschnitts kommen. Eine Auslösungsverhinderung ist ebenfalls denkbar. Es könnte ein hoher finanzieller Schaden entstehen.

Ein Schutzgerät ist beispielsweise aus der Produktbroschüre "SIPROTEC 5 - Distanzschutz, Leitungsdifferentialschutz und Überstromzeitschutz für 3-polige Auslösung 7SA82, 7SD82, 7SL82, 7SA84, 7SD84, 7SA86, 7SD86, 7SL86, 7SJ86", Dokumentversion: C53000-G5000-C010-D.01, Ausgabestand: August 2020, V8.30, bekannt.

Moderne FPGAs besitzen Zusatzfunktionen, die in Bruchteilen einer Sekunde Soft Errors detektieren und einer entscheidungsfähigen Instanz (z. B. einer CPU) weitermelden können. Aus der bisher unveröffentlichten europäischen Patentanmeldung mit dem Anmeldeaktenzeichen 21154309.5 ist es beispielsweise bekannt, anhand von Prüfwerten für verarbeitete Daten in einem elektrischen Betriebsmittel SEUs schnell und zuverlässig zu erkennen.

Ferner ist es bekannt, bei FPGAs eine regelmäßige automatisierte Erkennung von Bitfehlern durchzuführen. Es können unterschiedliche Arten von "Soft-Errors" erkannt werden. Somit beschränken sich die Szenarien nicht reinweg auf SEUs, sondern schließen auch Probleme mit "Electromagnetic Interference" (EMI) ein. Dabei kann EMI beispielsweise durch die Störung anderer Geräte mittels elektromagnetischer Effekte entstehen.
Dabei wird z.B. für die gesamte Konfiguration einer logischen Schaltung des FPGAs eine Checksumme gebildet, d.h. im einfachsten Fall werden alle Bits addiert. Aus der Veröffentlichung "LatticeXP2 Soft Error Detection (SED) Usage Guide", Lattice Semiconductor, 2012, ist es bekannt, die Konfiguration eines FPGA mittels Cyclischer Redundanzprüfung (CRC) zu überprüfen. Allerdings hat es sich im Betrieb z.B. eines Schutzgeräts mit einem solchen FPGA gezeigt, dass diese Erkennung zwischen einigen Millisekunden bis zu einer Sekunde dauert. In diesem Zeitraum kann es zur Fehlfunktion kommen, die z.B. zu fehlerhaften Schalthandlungen und damit verbundenen Schäden führt.

Um Fehler bei elektrischen Betriebsmitteln trotzdem schneller zuerkennen und Fehlhandlungen zu vermeiden, wird bisher auch eine redundante Signalverarbeitung eingesetzt. Z.B. werden drei Geräte bzw. deren Messwertverarbeitungs- und Prozessoreinrichtungen parallel betrieben. Eine Auswertung wird nur dann als korrekt betrachtet, wenn mindestens zwei Geräte das gleiche Ergebnis liefern (Entscheidung "2 aus 3"). Diese Bauweise hat den Nachteil, dass sie vergleichsweise aufwendig und teuer ist sowie einen erhöhten Platzbedarf aufweist.

Da bei Auftreten eines SEUs die korrekte Funktion des FPGAs nicht mehr gewährleistet ist, muss dieser "repariert" werden, indem man dessen CRAM rekonfiguriert. Diese Rekonfiguration bedeutet einen kurzzeitigen "Functional Interrupt"; sämtliche Schnittstellen des FPGAs nach außen setzen für einen gewissen Zeitraum aus. Das Gerät führt daraufhin einen Neustart (Reboot) durch, um erneut einen sicheren Betrieb zu gewährleisten. Dieser Vorgang nimmt je nach Gerät ca. eine halbe Minute in Anspruch. Während dieser Zeitspanne ist beispielsweise ein Schutzgerät nicht einsatzbereit, was ein Risiko für Folgeschäden für andere Betriebsmittel des Energieübertragungsnetzes birgt. Dies ist insbesondere problematisch, da große Netzbetreiber mit vielen Schutzgeräten erfahrungsgemäß ca. einmal pro Monat einen solchen temporären Ausfall eines Schutzgeräts infolge eines SEU registrieren. Ein weiterer Nachteil ist es, dass ein Reboot des Schutzgeräts für Kunden sichtbar ist und diese verpflichtet sein können, Ausfälle der Schutzgeräte zu melden, z.B. an eine zentrale Leitstelle. Typischerweise muss im Falle eines Reboots ein Techniker das Schutzgerät manuell überprüfen, entweder per Fernwartung oder ggf. sogar vor Ort. Beides ist aufwendig und verursacht Kosten.

An die Erfindung stellt sich ausgehend von bekannten elektrischen Betriebsmitteln die Aufgabe, ein vergleichsweise kostengünstig herstellbares Betriebsmittel anzugeben, mit dem Fehler der Steuerung eines Energienetzes aufgrund der Einwirkung von ionisierender Strahlung auf Halbleiterbausteine vergleichsweise sicher vermieden werden.

Die Erfindung löst diese Aufgabe durch ein elektrisches Betriebsmittel nach Anspruch 1.

Ein elektrisches Betriebsmittel kann beispielsweise ein Schutzgerät aufweisen, das in einem elektrischen Energieübertragungs- oder Energieverteilungsnetz angeordnet ist und beispielsweise einen Distanzschutz und/oder einen Differentialschutz und/oder einen Überspannungsschutz gewährleistet. Das Schutzgerät kann entsprechend Schutzbefehle an Leistungsschalter im Energienetz senden. Ein Energieübertragungs- oder Energieverteilungsnetz kann der Mittelspannungsebene (über 1 kV bis 52 kV) oder der Hochspannungsebene (über 52 kV) zugeordnet sein.

Es kann eine Messeinrichtung für das Betriebsmittel vorgesehen sein. Sie misst beispielsweise Strom- und/oder Spannungswerte als elektrische Messgrößen. Es können z.B. beide Werte im Betriebsmittel erfasst und analog weiter übertragen werden, beispielsweise an einen Digital-Analog-Wandler.

Die Vorverarbeitungseinrichtung für digitale Messwerte ist z.B. ausgebildet, um digitale Messwerte abzufragen, beispielsweise von einem Digital-Analog-Wandler. Die Abtastrate kann beispielsweise zw. 1 kHz und 100 kHz liegen, bevorzugt sind 5 kHz bis 15 kHz, noch mehr bevorzugt 8 kHz. Der Speicherbaustein mit der Konfiguration ist beispielsweise anfällig für Bitflips infolge einer Einwirkung von ionisierender Strahlung, was beispielsweise zur fehlerhaften Erkennung eines viel zu hohen Strom- oder Spannungswerts führen könnte. Entsprechend würde beispielsweise in der Prozessoreinrichtung ein Schwellenwert für die Auslösung eines Schutzbefehls zur Netzabschaltung fälschlicherweise ausgelöst werden, was erhebliche Kosten in Millionenhöhe für den Netzbetreiber nach sich ziehen kann.

Ferner kann eine Prozessoreinrichtung vorgesehen sein, die beispielsweise einen Prozessor sowie elektronische Datenspeicher zur Zwischenablage und/oder dauerhaften Speicherung von Daten aufweist. Die Datentelegramme können beispielsweise Schutzbefehle enthalten. Bei der Auswertung kann es sich beispielsweise in einem einfachen Fall um eine Überprüfung handeln, ob vorgegebene Grenzwerte für Strom- und Spannung überschritten werden. Ein Datentelegramm kann beispielsweise eine Abfolge von Bits sein, die unterschiedliche Daten kodieren. Es kann z.B. ein Schutzbefehl enthalten sein. Das Senden der Datentelegramme kann z.B. mittels einer Datenkommunikationseinrichtung erfolgen. Dabei kann eine Übertragung über eine Stromleitung, d.h. eine sog. "Powerline-Communication", eingesetzt werden. Alternativ kann auch eine Übertragung per Datenkabel (z.B. Ethernet über Kupferleitung oder Lichtwellenleiter) oder per Funk (long range radion, 2G, 3G, 4G, 5G) erfolgen. Es kann beispielsweise auch eine Übermittelung unter Zuhilfenahme von TCP/IP über das Internet erfolgen. Die Prozessoreinrichtung kann ausgebildet sein, im Falle keiner Störung die Auswertung und/oder das Senden von Datentelegrammen freizugeben.

Als andere elektrische Betriebsmittel können z.B. Schalter im Energienetz verwendet werden.

Die Erfindung kann mit Vorteil nicht nur bei Störungen infolge von SEU eingesetzt werden, sondern auch bei Einwirkung elektromagnetischer Strahlung, die beispielsweise den "LOCK" einer wichtigen Phasenregelschleife stört.

In einer bevorzugten Ausführungsform des erfindungsgemäßen elektrischen Betriebsmittels weist der integrierte Schaltkreis ein field-programmable gate-array und der elektronische Speicherbaustein ein static random-access memory auf. Dies ist ein Vorteil, weil insbesondere static random-acess memory (SRAM) Halbleiterbausteine empfindlich für Bitflips infolge z.B. ionisierender Strahlung sind.

Manche FPGAs sind in der Lage, einen sog. "Autorefresh" ihres CRAMs selbsttätig auszuführen, um Bitflips zu reparieren. Die Daten können z.B. aus einem internen oder externen Flashspeicher stammen. Alternativ kann auch ein Prozesoor den FPGA rekonfigurieren. Infolge einer SEU-Meldung stößt die Prozessoreinrichtung bzw. CPU diesen Vorgang im FPGA an. Für die Zeit des Autorefreshs blockiert die Gerätefirmware die Schutzfunktionen und friert den für das betreffende FPGA zuständigen Hardwaretreiber ein. Nach erfolgtem Autorefresh reinitialisiert die Gerätefirmeware den eingefrorenen Treiber und veranlasst einen Statuscheck des beteiligten FPGAs. Zeigt dieser keine Probleme, wird der Schutz wieder freigegeben. Der gesamte Vorgang benötigt im Gegensatz zu einem Geräteneustart nur Bruchteile einer Sekunde. Dieser Ansatz kann auch bei anderen Arten von Fehlern wie z.B. einer störenden Einwirkung elektromagnetischer Felder mit Vorteil eingesetzt werden.

In einer weiteren bevorzugten Ausführungsform des erfindungsgemäßen elektrischen Betriebsmittels ist ein Digital-Analog-Wandler ausgebildet, eine analoge elektrische Messgröße mit einer vorgegebenen Abtastrate in einen digitalen Messwert umzuwandeln. Dies ist ein Vorteil, weil auf diese Weise analoge Messwerte einfach in digitale Messwerte mit vorgegebener Abtastrate umgewandelt werden können.

In einer weiteren bevorzugten Ausführungsform des erfindungsgemäßen elektrischen Betriebsmittels weist der Konfigurationsspeicher-baustein einen "configuration random-access memory" (CRAM) auf.

In einer weiteren bevorzugten Ausführungsform des erfindungsgemäßen elektrischen Betriebsmittels weist das Betriebsmittel ein Schutzgerät auf, das ausgebildet ist, Datentelegramme mit Schutzbefehlen mittels einer Datenkommunikationseinrichtung an andere Betriebsmittel in einem Energienetz zu senden.

In einer weiteren bevorzugten Ausführungsform des erfindungsgemäßen elektrischen Betriebsmittels ist das Schutzgerät ausgebildet, für die Dauer des Ladens der Konfiguration einen Hardwaretreiber für die Vorverarbeitungseinrichtung und/oder Schutzfunktionen des Schutzgeräts auszuschalten.

In einer weiteren bevorzugten Ausführungsform des erfindungsgemäßen elektrischen Betriebsmittels ist das elektrische Betriebsmittel ausgebildet ist, einen bitflip als Störung zu erkennen.

In einer weiteren bevorzugten Ausführungsform des erfindungsgemäßen elektrischen Betriebsmittels ist das Betriebsmittel ausgebildet, den Betrieb der Vorverarbeitungseinrichtung erst wieder aufzunehmen, nachdem eine Funktionstüchtigkeit der geladenen Konfiguration für die Vorverarbeitungseinrichtung überprüft wurde.

In einer weiteren bevorzugten Ausführungsform des erfindungsgemäßen elektrischen Betriebsmittels ist das Betriebsmittel ausgebildet, den Betrieb der Vorverarbeitungseinrichtung für weniger als 100 ms zu unterbrechen. Bevorzugt wird der Betrieb für weniger als 60 ms unterbrochen. Noch mehr bevorzugt wird der Betrieb für weniger als 30 ms unterbrochen. Dies ist ein wesentlicher Vorteil der Erfindung, weil Fehler schneller als bisher behoben werden können und die Schutzfunktionen für ein Energienetz rasch wiederhergestellt sind.

An die Erfindung stellt sich ferner die Aufgabe, ein Verfahren zum Beheben von Störungen in einem elektrischen Betriebsmittel anzugeben, mit dem Fehler der Steuerung eines Energienetzes aufgrund der Einwirkung von Strahlung auf Halbleiterbausteine vermieden werden.

Die Erfindung löst diese Aufgabe durch ein Verfahren nach Anspruch 10. Bevorzugte Ausführungsformen ergeben sich aus den Unteransprüchen 11 bis 15. Es ergeben sich dabei für das erfindungsgemäße Verfahren und seine Ausführungsformen sinngemäß die gleichen Vorteile wie eingangs für das erfindungsgemäße elektrische Betriebsmittel erläutert.

Im Folgenden wird ein Ausführungsbeispiel für eine Reinitialisierung der Gerätefunktion im Falle eines FPGA-Soft-Errors erläutert.

Eine Gerätekonfiguration eines Schutzgeräts weist Input-Output Karten auf, die analoge physikalische Größen durch Analog-Digital-Wandler (typischerweise Ströme und Spannungen) erfassen. Es werden auch binäre Information wie etwa Anlagenstatussignale erfasst. Die Input-Output Karten geben binäre Informationen aus (z.B. Anlagensteuersignale). Die gesamte Verarbeitung der Messgrößen und Signale erfolgt in einem FPGA pro I/O-Karte, das diese Informationen in passender Form wiederum mit einem Mainboard austauscht.

Das Mainboard führt einen zyklischen Daten- und Statusaustausch mit I/O-Karten aus. Auf der Verarbeitung dieser Daten basiert die Funktion des Gesamtgeräts.

Ein Ablauf einer Reinitialisierung weist beispielsweise die Schritte auf:
1) Kalt- oder Warmstart des Geräts:
   Schritt 1.1: Mainboard: Boot
   Schritt 1.2: Mainboard: Grundinitialisierung der I/O-Subsystems (Input-Output Karten; neben vielen weiteren Komponenten, wie z. B. Kommunikation); Inbetriebsetzung der Input-Output Karten (incl. FPGAs).
   Schritt 1.3: Mainboard: Start der Geräteapplikation
   Schritt 1.4: Mainboard: Statuscheck/Verarbeiten der Daten des I/O-Subsystems (periodisch bis zum Eintreten einer schwerwiegenden Betriebsbeeinträchtigung).
2) Ein Fehlerereignis im Input-Output Karten-FPGA tritt auf. Es kommt zu einer schwerwiegenden Betriebsbeeinträchtigung. Beispielsweise kann ein SEU eingetreten sein.
3) Der Speicherbaustein im FPGA erhält eine neue Konfiguration aus dem Konfigurationsspeicherbaustein:
   Schritt 3.1: Mainboard: erkennt problematischen I/O-Kartenzustand anhand Alarmstatus bzw. dauerhaft ausbleibender Statusmeldungen
   Schritt 3.2: Mainboard: nimmt die I/O-Datenverarbeitung außer Betrieb und markiert diese für alle Folgeapplikationen als ausgesetzt
   Schritt 3.3: Mainboard: weist die betreffende I/O-Karte an, eine Rekonfiguration ihres FPGAs vorzunehmen. Beispielsweise können FPGAs eingesetzt werden, die bei Auftreten eines Soft-Errors diese Rekonfiguration sogar selbsttätig vornehmen können. Alternativ kann bei manchen Feldgeräten ein FPGA sich selbst (ohne Anweisung) rekonfigurieren, da es sein kann, dass die Kommunikation ebenfalls beeinträchtigt ist. Dieser "SelfRefresh" wird z.B. um 0,25 ms verzögert, um sicherzustellen, dass die Applikation vor dem Selfrefresh informiert wird.
   Schritt 3.4: Mainboard: Reinitialisierung und Überprüfung des I/O-Subsystems
   Schritt 3.5: Mainboard: I/O-Datenverarbeitung wird weitergeführt und für alle Folgeapplikationen als wiederaufgenommen markiert.

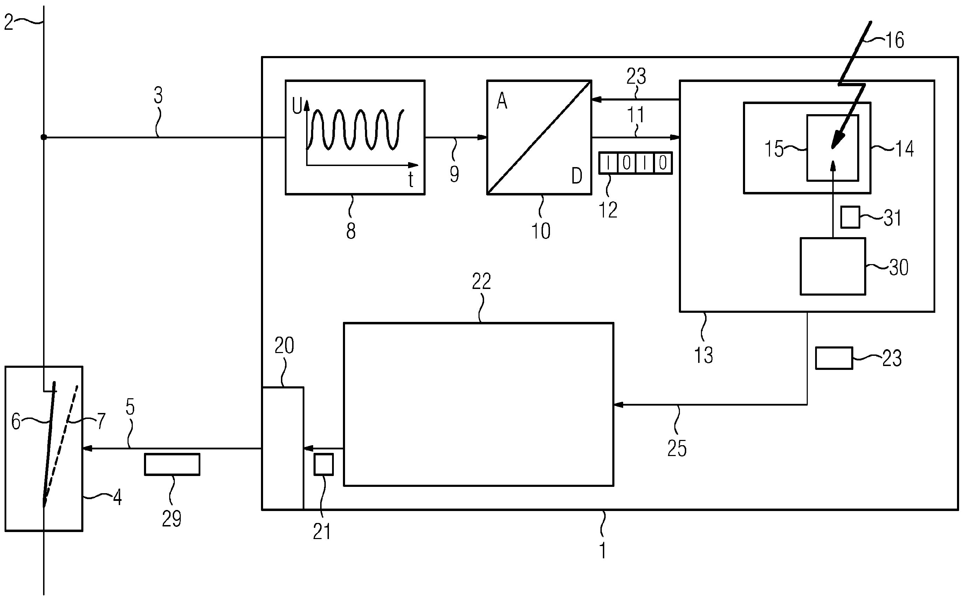

Zur besseren Erläuterung der Erfindung zeigt die Figur ein Ausführungsbeispiel eines erfindungsgemäßen elektrischen Betriebsmittels in schematischer Darstellung.

Eine elektrische Leitung 2 eines Energieübertragungsnetzes der Hochspannungsebene ist (ggf. über einen nicht dargestellten Messwandler) mittels der Leitung 3 mit einem elektrisches Betriebsmittel 1 verbunden, das als Schutzgerät ausgebildet ist. Im Schutzgerät 1 wird eine Messwertverarbeitungskette dargestellt.

Eine Messeinrichtung 8 für eine elektrische Messgröße ist ausgebildet, eine Spannung U in ihrem zeitlichen Verlauf t zu bestimmen. Ausgegeben werden über eine analoge Verbindung 9 analoge Messwerte, in diesem Fall ein Momentan-Spannungswert. Dieser Momentan-Spannungswert wird in einem Digital-Analog-Wandler 10 mit einer vorgegebenen Abtastrate von z.B. 8 kHz in eine Bitfolge (z.B. "1010") umgewandelt, die einen digitalen Messwert 12 angibt.

Dieser digitale Messwert 12 wird beispielsweise von einer eine Vorverarbeitungseinrichtung 13 für digitale Messwerte 12 abgefragt. Dabei weist die Vorverarbeitungseinrichtung einen integrierten Schaltkreis 14 und einen elektronischen Speicherbaustein 15 zur Konfiguration einer logischen Schaltung auf, wobei der integrierte Schaltkreis ein field-programmable gate-array (FPGA) und der elektronische Speicherbaustein ein static random-access memory (SRAM) aufweisen.

Wirkt nun hochenergetische Strahlung, beispielsweise ionisierende Strahlung wie z.B. Gamma-Strahlung 16 auf den elektronischen Speicherbaustein 15 ein, so kann sich ein sog. SEU ergeben. Dies kann zu einem Bitflip innerhalb der im elektronischen Speicherbaustein 15 verarbeiteten Bitfolge führen, insbesondere kann die dort gespeicherte Konfiguration beschädigt werden. Der integrierten Schaltkreis 14 kann nicht mehr korrekt arbeiten.

Über die Datenleitung 25 wird im Normalbetrieb eine Bitfolge 23 einer Prozessoreinrichtung 22 mit einer "central processing unit" (CPU) 26 und einen Datenspeicher 27 zur Verfügung gestellt.

Die Prozessoreinrichtung 22 ist ausgebildet, die vorverarbeiteten Messdaten, d.h. die Bitfolge 23, auszuwerten. Sie kann beispielsweise mittels eines Prüfwerts wie einer Checksumme eine Störung erkennen, und im Falle einer Störung die Auswertung und/oder das Senden von Datentelegrammen an andere elektrische Betriebsmittel 4 unterdrücken. Der Betrieb der Vorverarbeitungseinrichtung 13 wird solange unterbrochen, bis die Konfiguration 31 der logischen Schaltung aus einem Konfigurationsspeicherbaustein 30 in den elektronischen Speicherbaustein 15 geladen ist. Dies kann in weniger als 60 ms erfolgen, so dass das Gerät vergleichsweise schnell wieder einsatzbereit ist.

Liegt keine Störung vor, so kann die Prozessoreinrichtung 22 die Messwert usw. auswerten und bei Verletzung vorgegebener Grenzwerte beispielsweise eine Schutzfunktion für das elektrische Energienetz ausführen. In diesem Fall übergibt die Prozessoreinrichtung 22 einen Schutzbefehl 21 an eine Datenkommunikationseinrichtung 20, die ausgebildet ist, den Schutzbefehl 21 als ein Datentelegramm 29 über eine Datenkommunikationsverbindung 5 an einen Schalter 4 zu übermitteln.

Beispielsweise wird bei Empfang des Datentelegramms 29 in einer Steuereinrichtung (nicht dargestellt) für den Schalter 4 dieser ausgelöst, so dass der Schalter 4 von einem geschlossenem Zustand 6 in einen offenen Zustand 7 wechselt.

## Patentansprüche

1. Elektrisches Betriebsmittel (1), aufweisend eine Vorverarbeitungseinrichtung (13) für digitale Messwerte (12), wobei die Vorverarbeitungseinrichtung (13) einen integrierten Schaltkreis (14) und einen elektronischen Speicherbaustein (15) mit einer Konfiguration einer logischen Schaltung aufweist, und wobei
das elektrische Betriebsmittel (1) ausgebildet ist, eine Störung der Vorverarbeitungseinrichtung (13) zu erkennen, **dadurch gekennzeichnet, dass**
das elektrische Betriebsmittel (1) ausgebildet ist, im Falle einer Störung einen Betrieb der Vorverarbeitungseinrichtung (13) solange zu unterbrechen, bis die Konfiguration (31) der logischen Schaltung aus einem Konfigurationsspeicherbaustein (30) in den elektronischen Speicherbaustein (15) geladen ist.

2. Elektrisches Betriebsmittel (1) nach Anspruch 1, **dadurch gekennzeichnet, dass** der integrierte Schaltkreis (14) ein field-programmable gate-array und der elektronische Speicherbaustein (15) ein static random-access memory aufweisen.

3. Elektrisches Betriebsmittel (1) nach Anspruch 1 oder 2, **dadurch gekennzeichnet, dass** der Konfigurationsspeicherbaustein (30) einen "configuration random-access memory" (CRAM) aufweist.

4. Elektrisches Betriebsmittel (1) nach einem der vorhergehenden Ansprüche, **dadurch gekennzeichnet, dass** das Betriebsmittel (1) ein Schutzgerät aufweist, das ausgebildet ist, Datentelegramme (29) mit Schutzbefehlen mittels einer Datenkommunikationseinrichtung (20) an andere Betriebsmittel (4) in einem Energienetz (2) zu senden.

5. Elektrisches Betriebsmittel (1) nach Anspruch 4, **dadurch gekennzeichnet, dass** das Schutzgerät (1) ausgebildet ist, für die Dauer des Ladens der Konfiguration einen Hardwaretreiber für die Vorverarbeitungseinrichtung (13) und/oder Schutzfunktionen des Schutzgeräts (1) auszuschalten.

6. Elektrisches Betriebsmittel (1) nach einem der vorhergehenden Ansprüche, **dadurch gekennzeichnet, dass** das elektrische Betriebsmittel (1) ausgebildet ist, einen bitflip als Störung zu erkennen.

7. Elektrisches Betriebsmittel (1) nach einem der vorhergehenden Ansprüche, **dadurch gekennzeichnet, dass** das Betriebsmittel (1) ausgebildet ist, den Betrieb der Vorverarbeitungseinrichtung (13) erst wieder aufzunehmen, nachdem eine Funktionstüchtigkeit der geladenen Konfiguration (31) für die Vorverarbeitungseinrichtung (13) überprüft wurde.

8. Elektrisches Betriebsmittel (1) nach einem der vorhergehenden Ansprüche, **dadurch gekennzeichnet, dass** das Betriebsmittel (1) ausgebildet ist, den Betrieb der Vorverarbeitungseinrichtung (13) für weniger als 100 ms zu unterbrechen.

9. Verfahren zum Erkennen von Störungen in einem elektrischen Betriebsmittel (1), aufweisend die Schritte:
- Erkennen einer Störung in einer Vorverarbeitungseinrichtung (13) für digitale Messwerte (12), wobei für die Vorverarbeitungseinrichtung (13) ein integrierter Schaltkreis (14) und ein elektronischer Speicherbaustein (15) mit einer Konfiguration (31) einer logischen Schaltung verwendet werden, **dadurch gekennzeichnet, dass**
im Falle einer Störung ein Betrieb der Vorverarbeitungseinrichtung (13) solange unterbrochen wird, bis die Konfiguration (31) der logischen Schaltung aus einem Konfigurationsspeicherbaustein (30) in den elektronischen Speicherbaustein (15) geladen ist.

10. Verfahren nach Anspruch 9, **dadurch gekennzeichnet, dass** für den integrierten Schaltkreis (14) ein field-programmable gate-array und für den elektronischen Speicherbaustein (15) ein static random-access memory verwendet werden.

11. Verfahren nach Anspruch 9 oder 10, **dadurch gekennzeichnet, dass** für den Konfigurationsspeicherbaustein (30) einen "configuration random-access memory" (CRAM) verwendet wird.

12. Verfahren nach einem der Ansprüche 9 bis 11, **dadurch gekennzeichnet, dass** für das Betriebsmittel (1) ein Schutzgerät verwendet wird, mit dem Datentelegramme (29) mit Schutzbefehlen mittels einer Datenkommunikationseinrichtung (20) an andere Betriebsmittel (4) in einem Energienetz (2) gesendet werden.

13. Verfahren nach einem Anspruch 12, **dadurch gekennzeichnet, dass** mittels des Schutzgeräts für die Dauer des Ladens der Konfiguration ein Hardwaretreiber für die Vorverarbeitungseinrichtung (13) und/oder Schutzfunktionen des Schutzgeräts (1) ausgeschaltet werden.

14. Verfahren nach einem der vorhergehenden Ansprüche, **dadurch gekennzeichnet, dass** der Betrieb der Vorverarbeitungseinrichtung (13) erst wieder aufgenommen wird, nachdem eine Funktionstüchtigkeit der geladenen Konfiguration (31) für die Vorverarbeitungseinrichtung (13) überprüft wurde.

15. Verfahren nach einem der vorhergehenden Ansprüche, **dadurch gekennzeichnet**, der Betrieb der Vorverarbeitungseinrichtung (13) für weniger als 100 ms zu unterbrochen wird.
